# EUROPEAN PATENT APPLICATION

(11) **EP 3 157 121 A1**
(43) Date of publication of application: **19.04.2017**
(21) Application number: 15189691.7
(22) Date of filing: 14.10.2015
(51) Int. Cl.: H02J 3/14, H02J 13/00

(54) **SYSTEM AND METHOD FOR MANAGING ELECTRIC POWER CONSUMPTION**

(71) Applicant: Advanced Digital Broadcast S.A., 1292 Geneva (CH)
(72) Inventor: Cichonski, Dariusz, 65-119 Zielona Gora (PL)
(74) Representative: Blonski, Pawel

(57) **Abstract**

A method for managing electric power consumption of at least two client devices, by a server, the method being characterized in that it comprises the steps of: receiving (910) data from at least two external devices, regarding their operation request as well as the selected energy consumption plan of the device; based on these data, obtaining (922) a definition of the identified selected energy consumption plans of the at least two external devices; calculating (923) when a deferred program execution shall begin for each of the at least two external devices, taking into account given tariff timespan as well as respective energy consumption plans of the at least two external devices in order to achieve a substantially even power consumption by the at least two external devices within said given tariff timespan; transmitting (911) a newly set deferred run time to each of the least two external devices.

## Description

### TECHNICAL FIELD

The present invention relates to a system and method for managing electric power consumption. In particular, the present invention relates to optimizing power consumption based on assigned tariffs as well as more global energy consumption requirements.

### BACKGROUND OF THE INVENTION

Prior art defines US 5430430 A entitled "Method of managing electric power on the basis of tariff schedules, in a network within a dwelling or the like" disclosing a method allowing the management of electric power on the basis of the tariff schedules in force in a network (20) within a dwelling. The method according to the invention is based on communication which is established automatically between domestic appliances (201-205, 207, 210) and a so-called electric power manager unit (211) of which the task is, in particular, to coordinate the management of tariff schedules. The method makes it possible to slave the operation of appliances (201-205, 207, 210) to the tariff status in force which is known to the manager (211) by means of a link with an electricity meter (200) fitted in the network (20).

This guarantees to a user, that a cycle is started under optimum tariff conditions, something which cannot be obtained reliably by simple deferred starting.

A drawback of this solution is that all the devices programmed with deferred start will run at the same time when a tariff change signal arrives. This will create a peak consumption, which is not advantageous.

Another prior art publication WO 2009067257 A1 entitled "Energy use control system and method" discloses devices and systems that control energy usage in accordance with instructions from a head end system. A device may be instructed to cease energy consumption. Another device may allow users to override some instructions. Messages may be provided to users to request the cessation of energy consumption; the users may, but need not comply.

In this prior art a device may be instructed to cease energy consumption entirely. A time and duration may be specified. The request may specify a class of devices, or alternatively a specific device.

A drawback of this solution is that if a programmed device is requested to cease operation it may in the end not executed its programmed tasks. Thus this solution is not optimum from users' perspective.

It would be advantageous to present a system and method for managing electric power consumption wherein devices are proactively managed in order to meet global power consumption preferences as well as local electric power use constraints.

### SUMMARY AND OBJECTS OF THE PRESENT INVENTION

A first object of the present invention is a method for managing electric power consumption of a client device, the method being characterized in that it comprises the steps of: receiving a request to start an operating program associated with an energy consumption plan comprising at least one step; exchanging data with an external device, regarding the operation request as well as the selected energy consumption plan of the device; receiving a newly set deferred run time wherein said newly set deferred run time has been set by taking into account deferred run time and an energy consumption plan of at least one other device; awaiting till the newly set deferred run start; and executing said at least one step of the energy consumption plan.

Preferably, said client device is an Internet of Things device.

Preferably, the request to start an operating program, comprises deferred run settings.

Preferably, the step of exchanging and receiving is executed by communicating with an energy supplier's server.

Preferably, the step of exchanging and receiving is executed by communicating with a smart meter.

An object of the present invention is also a method for managing electric power consumption of at least two client devices, by a server, the method being characterized in that it comprises the steps of: receiving data from at least two external devices, regarding their operation request as well as the selected energy consumption plan of the device; based on these data, obtaining a definition of the identified selected energy consumption plans of the at least two external devices; calculating when a deferred program execution shall begin for each of the at least two external devices, taking into account given tariff timespan as well as respective energy consumption plans of the at least two external devices in order to achieve a substantially even power consumption by the at least two external devices within said given tariff timespan; transmitting a newly set deferred run time to each of the least two external devices.

Preferably, the step of obtaining a definition of the identified selected energy consumption plans of the at least two external devices comprises transmitting a request for data from devices' manufacturer based on respective identifiers of the least two external devices and receiving requested data from the respective device's manufacturers systems.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for managing electric power consumption. Further details and features of the present invention, its nature and various advantages will become more apparent from the following detailed description of the preferred embodiments shown in a drawing, in which:
Fig. 1 presents a diagram of the system according to the present invention;
Fig. 2A presents a diagram of the system present at user's premise wherein a smart meter is used;
Fig. 2B presents a diagram of the system present at user's premise wherein a direct connection to an external network is used;
Fig. 3 presents a diagram of a smart meter according to the present invention;
Fig. 4 depicts a block diagram of a user's device;
Figs. 5A-B present management of deferred start schedule;
Figs. 6A-C depict management of power plans;
Fig. 7 presents a diagram of a method according to the present invention;
Figs. 8A-B present another example of energy consumption plans modification for two devices running in parallel;
Fig. 9 presents processing of device's energy consumption plan by an energy supplier; and
Fig. 10 presents adjusting device's energy consumption plan by coordinating different devices among themselves without a need to involve an energy supplier.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

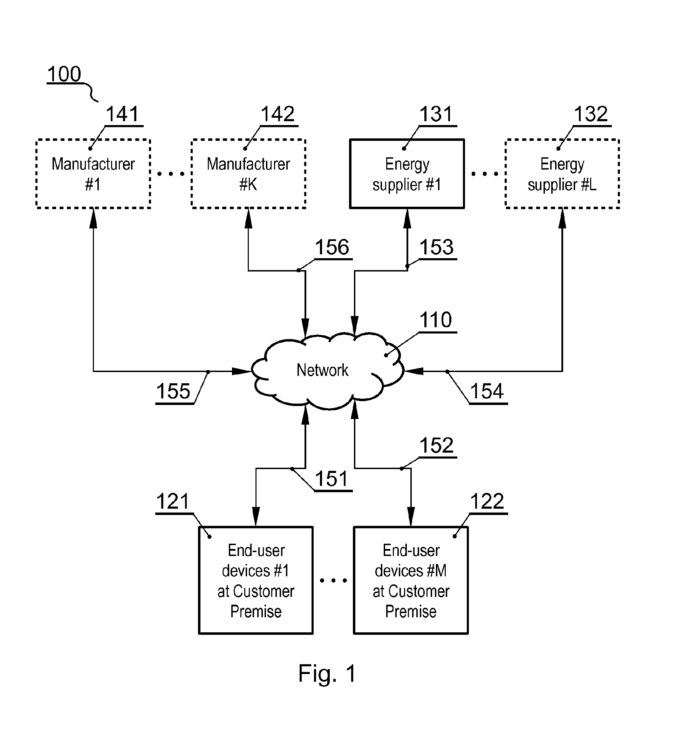

Fig. 1 presents a diagram of the system (100) according to the present invention. The system comprises at least one user device (121, 122) located at customer premise. The user devices (121, 122) are connected to power supply and are communicatively coupled (151, 152) to a network (110) so that they may effectively communicate with each other and/or external devices such as appropriate controllers. The network (110) may, in one embodiment, comprise power lines over which bidirectional communication may also be effected or may be split, in other embodiments, into power lines network and communication network such as the Internet.

The network is supplied with power (153) by at least one power supplier (131). There may however be more than one power suppliers (132).

Optionally, also manufacturer's servers (141, 142) may be connected to the network such that power consumption plans of different devices may be accessible as well as software updates and power consumption plans updates may be accessible to controllers and/or user devices. For example, a software update for a washing machine may influence its power consumption plans.

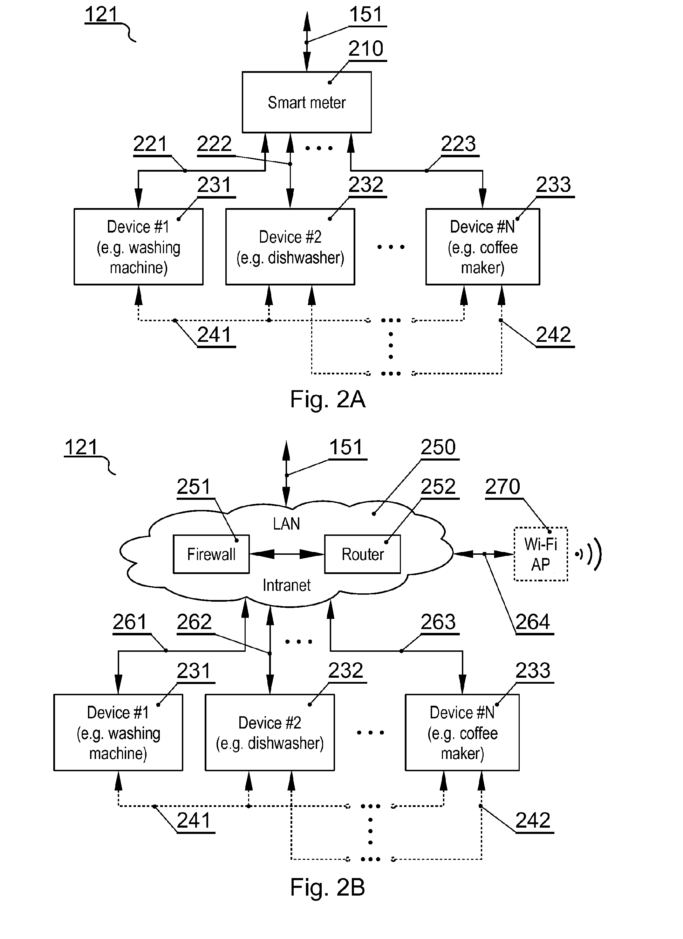

Fig. 2A presents a diagram of the system present at user's premise wherein a smart meter is used. The function of the smart meter (210) is an intermediary between a given customer premise and a power supplier. The smart meter (210) may comprise information on maximum allowed power for a customer premise. This allows adjustments of power consumption programs of devices when the devices (231, 232, 233) cooperate (221, 222, 223) only within a particular customer premise. The smart meter (210) may communicate (151) with an external device i.e. a power supplier server.

Alternatively, the devices (231, 232, 233) pass messages from one to another forming a mesh network wherein ultimately the messages reach the smart meter (210).

In another embodiment, the respective devices (231, 232, 233) may have a programmed maximum power threshold for a customer premise and create an ad-hoc network among themselves (241, 242) in order to agree on power consumption plans. Fig. 2B presents a diagram of the system, present at user's premise wherein a direct connection to an external network is used. This figure presents a different communication medium with the energy supplier. There is a general Ethernet (251, 252, 250) network present in this embodiment. Naturally, any communication network may be used as a communication medium (for example wired or wireless (270)).

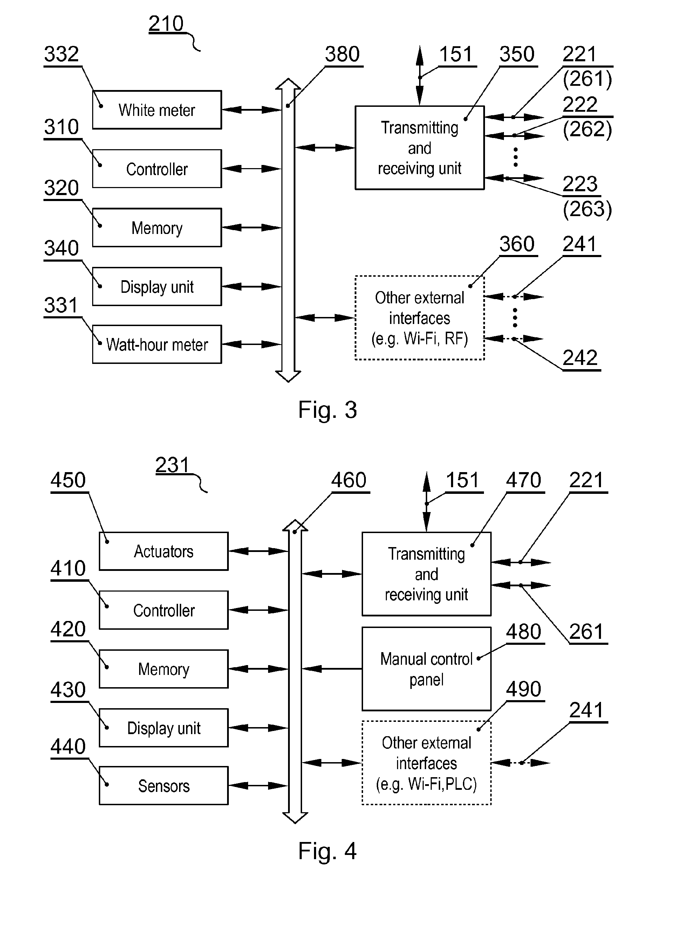

Fig. 3 presents a diagram of a smart meter according to the present invention. The meter may comprise a display unit (340) for allowing manual operation by a user. Naturally, it comprises a watt-hour meter (331) and/or a white meter (332). A white meter works by offering a distinct tariff for energy consumption at different times. The components of the smart meter are managed by a controller (310) cooperating with a memory (320).

The memory may store software, configuration data as well as readings data. The smart meter may communicate (151) with a power supplier and/or devices' manufacturers by means of a transmitting and receiving unit (350). Communication with user premise devices may be effected by means of other external interfaces (e.g. Wi-Fi, RF, PLC) (360) for local communication.

Fig. 4 depicts a block diagram of a user's devices such as a dishwasher, coffee machine, washing machine etc. The components of the user's device are managed by a controller (410) cooperating with a memory (420). The memory may store software, configuration data (such as deferred start configuration) as well as power consumption plan(s) data. Further there may be present a display unit (430) for allowing manual operation by a user, also by means of an optional manual control panel (480).

The controller (410) may control different sensors (440) and/or actuators (450) of the user's device (eg. control fan speed, frequency of operation, timing of operation etc.).

Similarly as the smart meter, each user's device may communicate (151) with a power supplier and/or smart meter and/or devices' manufacturers by means of a transmitting and receiving unit (470). Communication with user premise devices may be effected by means of other external interfaces (e.g. Wi-Fi, RF, PLC) (490) for local communication.

Now that the elements of the system have been described, operation of managing electrical power consumption will be described. To this end, two aims of the invention may be distinguished.

The first aim is to collect deferred start instructions issued to users' devices, collect power plans of these user's devices according to selected configurations of the deferred start and subsequently automatically spread operation of these devices (by adjusting the deferred start times) so that power consumption is substantially even throughout a given time window, for example a time when a more cost effective tariff is in force. This allows to avoid peak consumption periods followed by relatively low power consumption periods.

In case of renewable Energy sources, there may be Times with increased Energy generation and an Energy supplier, for example based on weather forecast, may schedule more consumption at selected times of day.

The second aim of the present invention, with respect to managing electrical power consumption, is controlling of power consumption plans of different devices so that a maximum electrical power consumption level is obeyed. For example, a maximum current that will not initiate a fuse in a user's premise. Such control of a power consumption plan requires a definition of power consumption at different times of operation of a programmed device run.

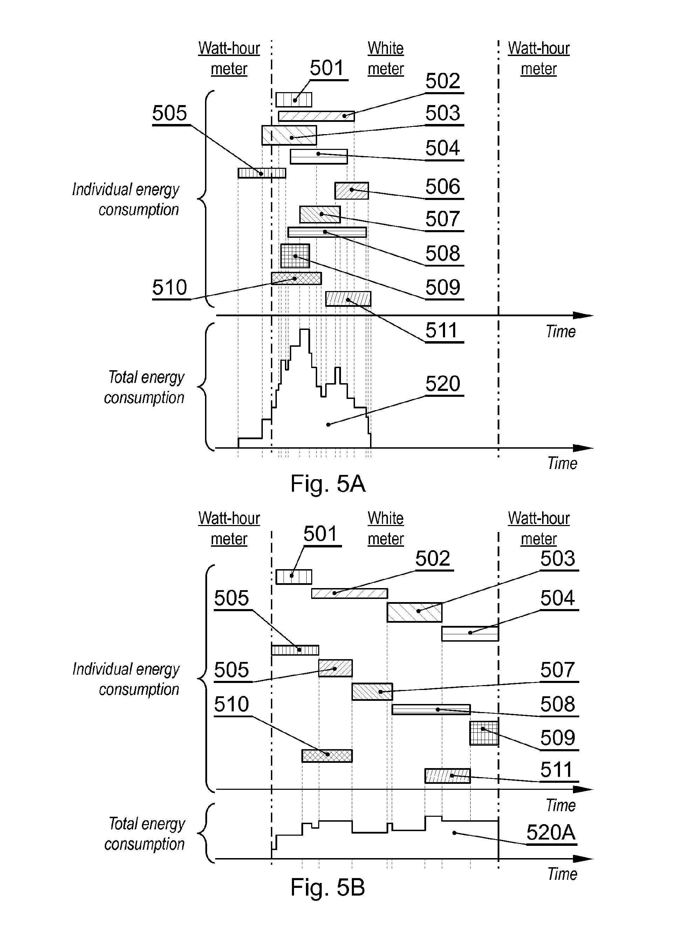

Figs. 5A-B present management of deferred start schedule. Users of different devices (501-511) program a deferred start, for each of the devices, as shown in Fig. 5A. Each rectangle denotes power consumption over time wherein the height of the respective rectangle denotes power quantity, for example in kWh, while the width of the respective rectangle denotes time of operation.

In practice, the deferred start programming is caused by availability of a lower price tariff at night. However, the users are not concerned with peak power consumption in a larger scale, for example a residential area, a district or a city. Therefore, not optimized total energy consumption (520) tends to cumulate at the beginning of the lower tariff timespan, while remaining at low levels afterwards. This peak is disadvantageous for energy suppliers since delivering more stable power resources is more environmentally friendly as well as more efficient in resources used for generating electricity.

According to the present invention, the information regarding deferred start, power consumption and duration of the power consumption may be transferred to an energy supplier (131, 132) (or a smart meter (210)) so that the total timespan of a lower price tariff (or any given tariff) may be optimized for a substantially even power delivery/consumption. To this end, said energy supplier (131, 132) organizes the schedule and transmits back instructions to said devices (501-511).

Some of the devices may be programmed not to exceed a given time window while running the scheduled operation. For example, a user of a washing machine may program a deferred start between 10 p.m. and 6 a.m. The run of the washing machine may take for example 1 hour and it will be up to the energy supplier to determine at which exact time between 10 p.m. and 6 a.m. the program will start. For example, a run (509) may be required to be rescheduled from the beginning of a time window to its and, as shown in Fig. 5B.

Fig. 5B shows the initially programmed deferred runs, optimized by the energy supplier (131, 132) that communicates any changes in schedules to the respective smart power meters (210) or directly to the devices (231-233), programmed initially by users.

As shown, after optimization, power consumption is substantially even (520A) during the timespan.

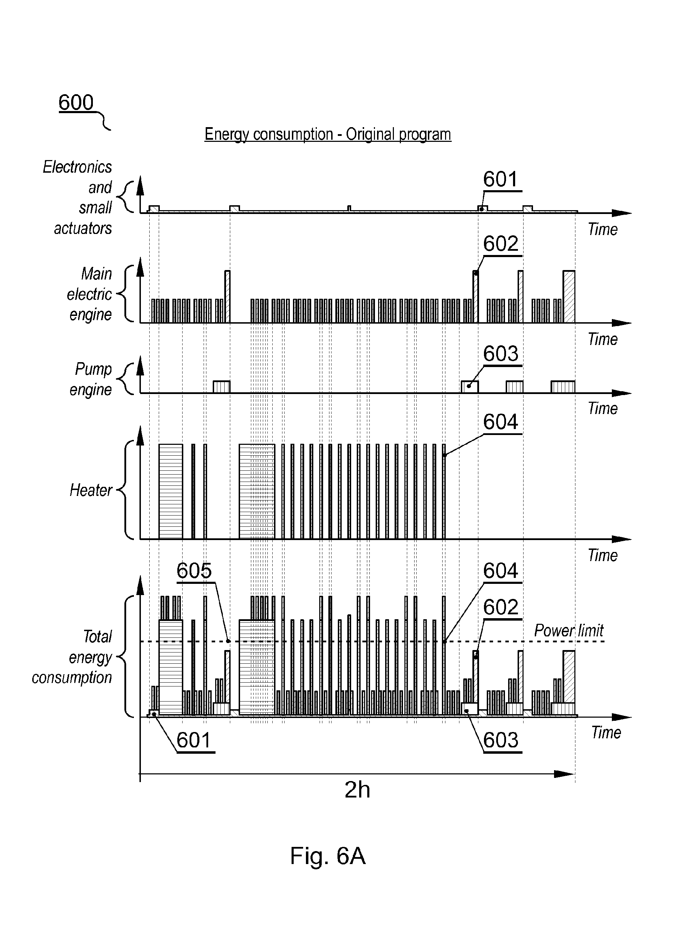

Figs. 6A-C depict management of power plans. Fig. 6A presents an original power consumption program of a washing machine (600). There are four energy consuming subdevices (four are shown for the sake of clarity while a given, real device may comprise more or fewer such energy consuming subdevices). The first subdevice (601) is electronics and small actuators, which generally have low energy reqirements. The second subdevice (602) is a main electric engine, which as shown operates in cycles and consumes much more energy than the subdevice (601). The third subdevice is a pump engine (603) while the last, fourth subdevice is a heater (604).

These subdevices (601-604) have predefined operating schedules (typically more than one in case of complex devices such as a dishwasher or a washing machine), which results in energy consumption plans comprising at least one step (energy consuming action).

Such plans may be stored in the devices and/or be available via telecommunication network, for example to a smart meter (201) or an energy supplier. In the context of the present invention, the energy consumption plans may be modified, for example different suboperations may be deferred or narrowed in time, while increasing peak power consumption or extended in time, while decreasing peak power consumption respectively.

To this end, each suboperation of an energy consumption plan may have its properties defining whether it is allowed to modify its run time and/or its delay with respect to other events (for example some events must be run immediately while other may be dalayed), such as completion of another task must be followed within 20 minutes by another task.

As shown in a total energy consumption graph, respective subdevices (601-604) may at times operate in parallel thereby potentially causing a risk of crossing a power consumption limit (605). A total run time of the presented energy consumption plan is 2 hours.

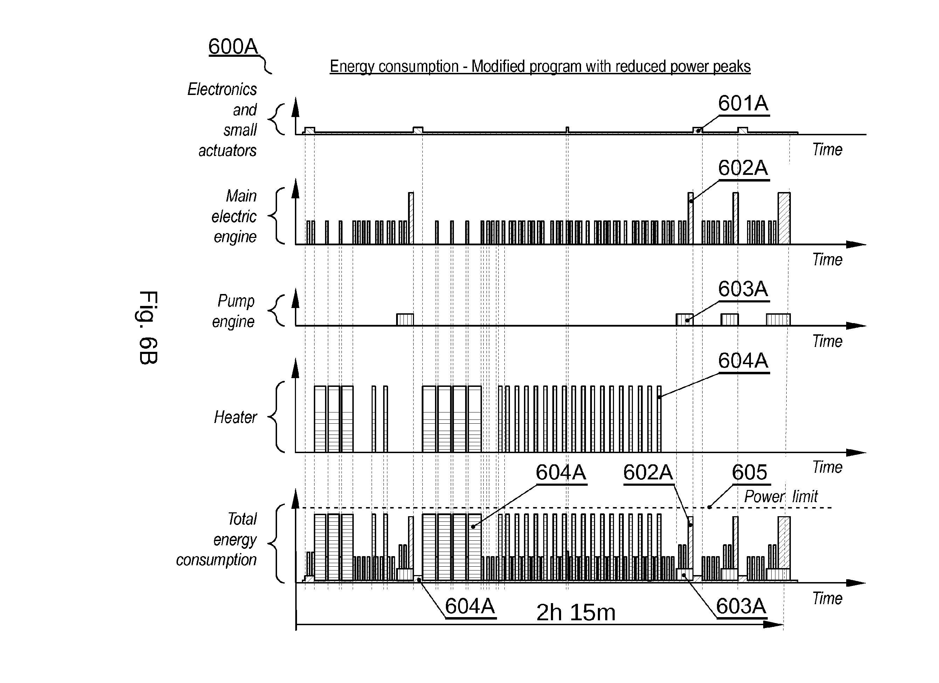

Fig. 6B presents a modified program (energy consumption plan) with reduced power peaks (600A). The modified program runs for two hours and fifteen minutes i.e. longer than the original energy consumption plan (600) of the washing machine. As may be seen, the main electric engine (602A) remains stopped for more/longer periods of time while the heater (604A) operation has been split into more suboperations so that the heater (604A) does not operate together with the main electric engine (602A). The operation of the pump (603A) has been shifted accordingly in time but its run time and power consumption have not been modified. This modification (600A) of the energy consumption plan (600) increases run time but allows to obey the power limit (605A).

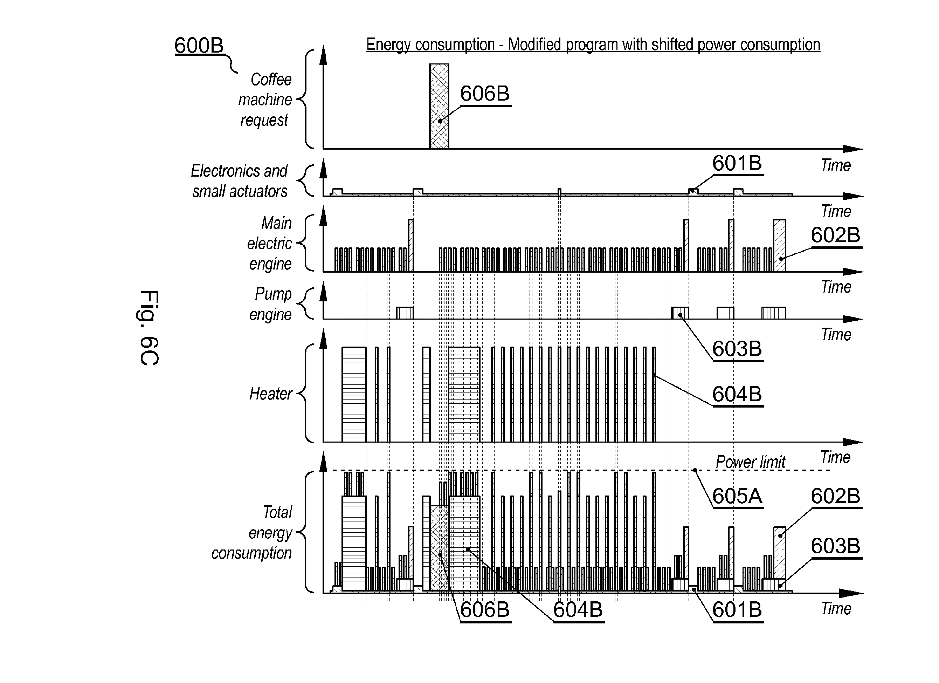

Fig. 6C presents a modified program (energy consumption plan) (600B) taking into account an ad-hoc request of another device to run at the same time. In this case, a coffee machine (606B) requests operation (scheduled or unscheduled), while the washing machine of Fig. 6B operates. In order to comply with the power limit (605B) the coffee machine is allowed to operate instantly as its operation time is relatively low. Since the coffee machine requires relatively high amount of energy, the heater (604B) of the washing machine is switched off at the time the coffee machine runs but is allowed to operate together with the electric motor (602B) when the coffee machine (606B) has finished its operation.

From the description of Figs. 6A-C it is clear that the same operating program selected for a device by a user may be executed differently depending on current energy consumption context i.e. time of day, number of simultaneously operating devices etc.

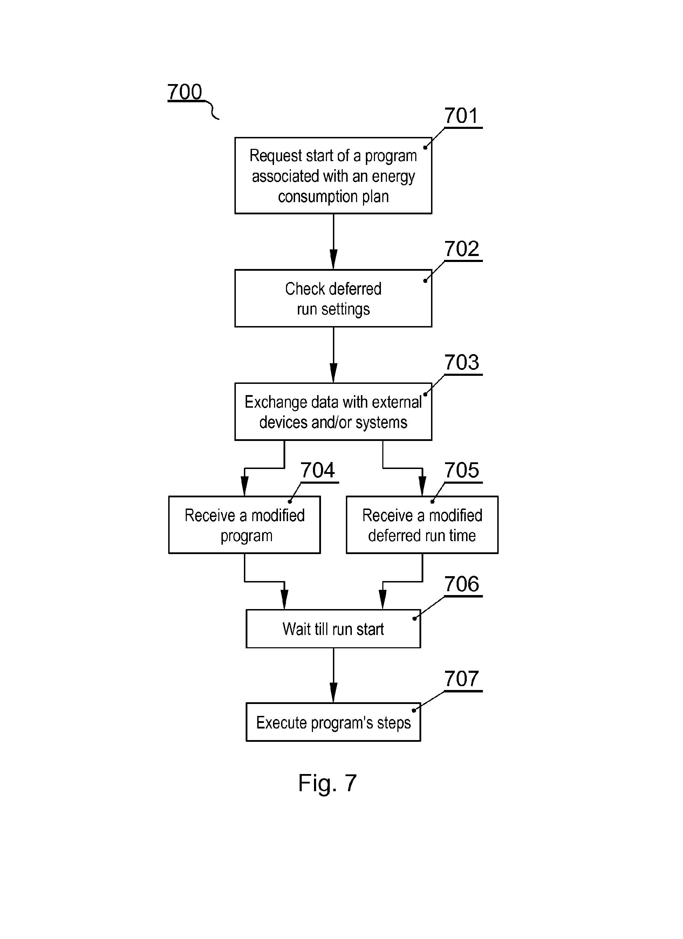

Fig. 7 presents a diagram of a method (700) according to the present invention. This method is organized from a perspective of a home appliance device.

The method starts at step (701) from a request start of a program associated with an energy consumption plan. In its simplest form it means starting operation of a device by pressing for example a power on or start button. At this time it is known which energy consumption plan is associated with a selected mode of operation of the device. At step (702) there are checked deferred run settings. Preferably, each device has a possibility of deferring its run by setting appropriate options.

Subsequently, at step (703), there is exchanged data with external device(s) and/or system(s), regarding the operation request as well as the selected energy consumption plan of the device. A reference to the selected energy consumption plan may be made, whereas details of such a plan may be available for download, by other devices, from alternative sources (for example: device's manufacturer server).

Next, at steps (704) and (705) there are received devices' run modifying data. Either step (704) or (705) may be executed or both may be executed for a single device. At step (704) there is received a modified program, for example as shown in Fig 6B, while at step (705) there is receive a modified (or newly set) deferred run time, for example in line with a program shown in Fig. 5B. After reception of run modification (704) and/or (705) the device awaits till run start (706). The run start delay may equal 0 thereby allowing for an immediate start. Finally, at step (707) there are executed program's steps.

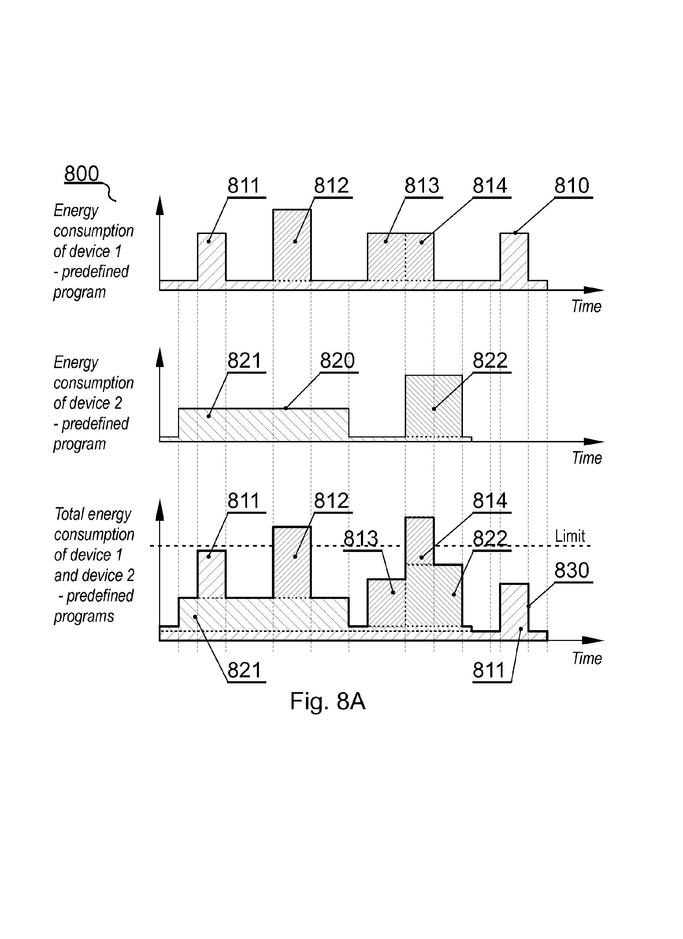

Figs. 8A-B present another example of energy consumption plans modification for two devices running in parallel. The diagram (800) in Fig. 8A presents an energy consumption of device 1 - predefined program as well as an energy consumption of device 2 - predefined program. The energy consumption of the device 1 results in different power consumption peaks (810) - (814), while the energy consumption of the device 2 results in different power consumption peaks (820) - (822).

The bottom diagram of Fig. 8A presents a total energy consumption of device 1 and device 2 - predefined programs. As may be seen, by examining power consumption level envelope, a limit of power consumption is crossed two times. This is disadvantageous as previously explained.

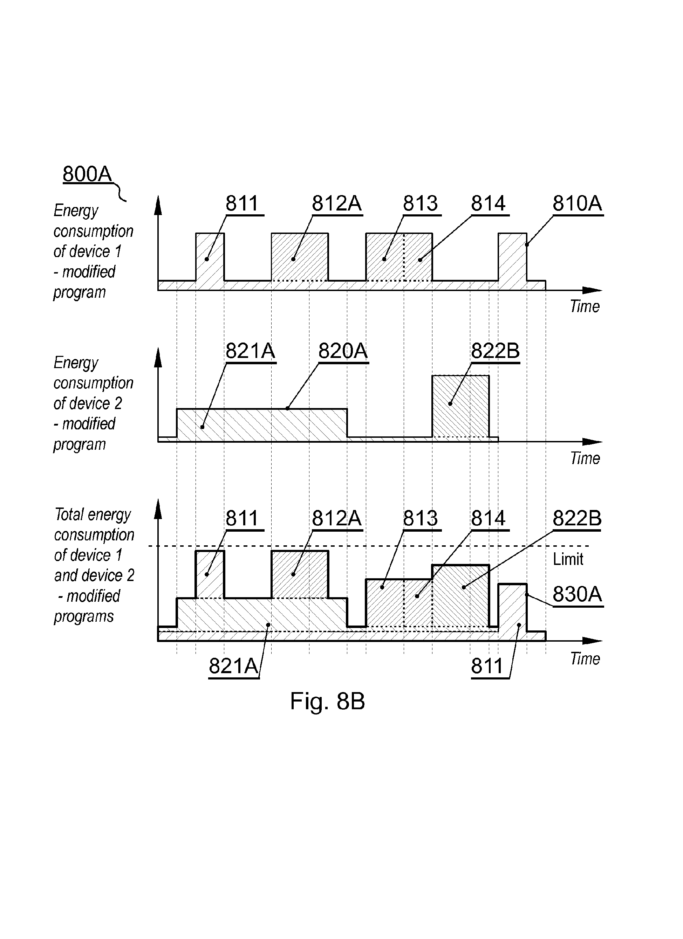

Fig. 8B shows a modified energy consumption plan for both devices presented in Fig. 8A. As can be see suboperation (812) has been modified to suboperation (812A) where lower power consumption is kept for a longer period of time. Further, suboperation (822) has been moved in time to a time indicated by item (822A) in order not to execute, in parallel, energy consuming tasks, thereby allowing to meet power limit requirements.

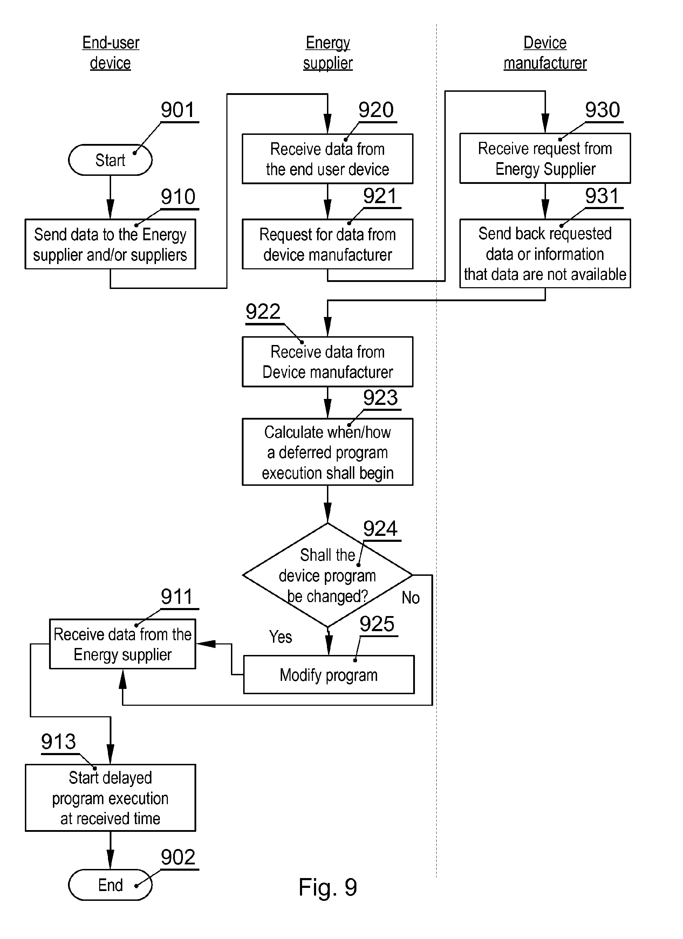

Fig. 9 presents processing of device's energy consumption plan by an energy supplier. This happens between step (703) and steps (704, 705) of Fig. 7. Step (703) corresponds to step (910) in Fig. 9. At step (920), a computer system of an energy supplier receives data from the end user device. The received data comprise at least a device identifier as well as a selected operation mode. Based on these data, the energy supplier's system executes, at step (921), a request for data from devices manufacturer. At step (930) a devices manufactures receives a request from an energy supplier, which asks for a definition of a particular energy consumption plan and/or its properties. The devices manufacturer responds (931) by sending back requested data or information that data are not available.

Subsequently, at step (922), an energy supplier receives data from the device's manufacturer and calculates, at step (923), when/how a deferred program execution shall begin. Depending on number of devices in a household or a residential area, new energy consumption plans are organized, as shown for example in Figs. 5A-B and Figs. 6A-C respectively. Before modifying an energy consumption plan (925), the energy supplier's system checks (924) whether the device program shall be changed.

Further, at step (911), a user's device receives data from the energy supplier. This step corresponds to step (704/705) in Fig. 7.

Lastly, at step (912), there is started deferred program execution at received time and according to the modified energy consumption plan as programmed by the energy supplier.

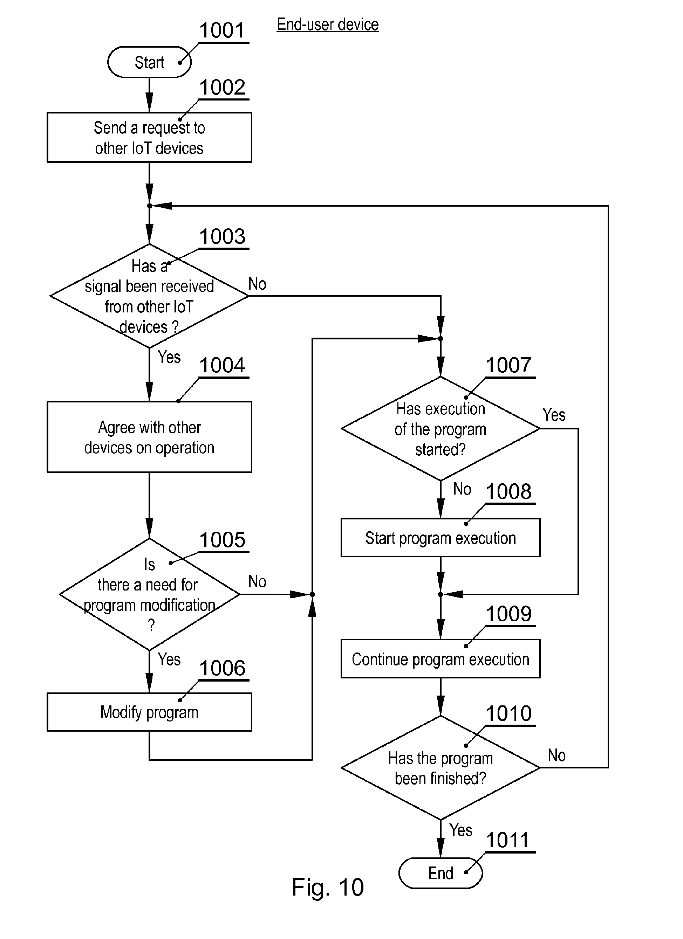

Fig. 10 presents adjusting device's energy consumption plan by coordinating different devices among themselves without a need to involve an energy supplier. For example one of the user devices may assume a role of a controller and define energy consumption plans for a group of devices.

The process starts, at step (1002), from sending a request to devices. The devices may be Internet Of Things (loT) devices, supporting different communication protocols and being capable of communicating within a group of devices. The loT allows objects to be sensed and controlled remotely across existing network infrastructure.

The request may be sent as a multicast transmission in order to form an ad-hoc network of local devices (any network formed at request). The transmitted data comprise at least a device identifier as well as a selected operation mode and its corresponding energy consumption plan. Further, the devices must also know the preferred power consumption limit applicable within a given group of devices.

Such limits may be programmed by users, or be available from a smart meter (210) or an energy supplier (131, 132).

At step (1003) each device checks whether a signal been received from other loT devices. In case a signal has been received from at least one other device, at step (1004) there is agreed an operation schedule with other available devices. At step (1005) a user device establishes whether there is a need for program modification and in case there is, the program is modified at step (1006).

Lastly, the agreed program is executed at steps (1007, 1008, 1009) until the program has finished (1010).

As described above, the present invention allows for meeting power limits, controlling power consumption as well as avoiding power consumption peaks in a micro and macro scale. Therefore, the invention provides a useful, concrete and tangible result.

Further, the technical concept presented herein has been implemented in particular devices such as home appliances, smart meters, thus the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for managing electric power consumption may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for managing electric power consumption of a client device, the method being **characterized in that** it comprises the steps of:
• receiving (701) a request to start an operating program associated with an energy consumption plan comprising at least one step;
• exchanging (703) data with an external device, regarding the operation request as well as the selected energy consumption plan of the device;
• receiving (704) a newly set deferred run time wherein said newly set deferred run time has been set by taking into account deferred run time and an energy consumption plan of at least one other device;
• awaiting till the newly set deferred run start (706); and
• executing (707) said at least one step of the energy consumption plan.

2. The method according to claim 1 **characterized in that** said client device is an Internet of Things device.

3. The method according to claim 1 **characterized in that** the request to start an operating program, comprises deferred run settings.

4. The method according to claim 1 **characterized in that** the step of exchanging (703) and receiving (704) is executed by communicating with an energy supplier's (131, 132) server.

5. The method according to claim 1 **characterized in that** the step of exchanging (703) and receiving (704) is executed by communicating with a smart meter (210).

6. A computer program comprising program code means for performing all the steps of the computer-implemented method according to claim 1 when said program is run on a computer.

7. A computer readable medium storing computer-executable instructions performing all the steps of the computer-implemented method according to claim 1 when executed on a computer.

8. A method for managing electric power consumption of at least two client devices, by a server, the method being **characterized in that** it comprises the steps of:
• receiving (910) data from at least two external devices, regarding their operation request as well as the selected energy consumption plan of the device;
• based on these data, obtaining (922) a definition of the identified selected energy consumption plans of the at least two external devices;
• calculating (923) when a deferred program execution shall begin for each of the at least two external devices, taking into account given tariff timespan as well as respective energy consumption plans of the at least two external devices in order to achieve a substantially even power consumption by the at least two external devices within said given tariff timespan;
• transmitting (911) a newly set deferred run time to each of the least two external devices.

9. The method according to claim 8 wherein the step of obtaining (922) a definition of the identified selected energy consumption plans of the at least two external devices comprises transmitting a request for data from devices' manufacturer based on respective identifiers of the least two external devices and receiving requested data from the respective device's manufacturers systems.

10. A computer program comprising program code means for performing all the steps of the computer-implemented method according to claim 8 when said program is run on a computer.

11. A computer readable medium storing computer-executable instructions performing all the steps of the computer-implemented method according to claim 8 when executed on a computer.
